# EUROPEAN PATENT APPLICATION

(11) **EP 2 835 216 A1**
(43) Date of publication of application: **11.02.2015**
(21) Application number: 14179243.2
(22) Date of filing: 31.07.2014
(51) Int. Cl.: B24B 19/16, B23K 11/11, B23K 11/30, B24B 49/16

(54) **Grinding system and spot welding system**

(30) Priority: 31.07.2013 JP 2013159633
(71) Applicant: Kabushiki Kaisha Yaskawa Denki, Kitakyushu-shi, Fukuoka 806-0004 (JP)
(72) Inventor: Mori, Yosuke, Kitakyushu-shi, Fukuoka 806-0004 (JP); Sonoda, Teppei, Kitakyushu-shi, Fukuoka 806-0004 (JP)
(74) Representative: Viering, Jentschura & Partner Patent- und Rechtsanwälte

(57) **Abstract**

A grinding system (2) includes a period determiner (40a) that determines, on the basis of a torque of a grinder (24) of a dresser (20) that grinds a welding tip (15a), whether the current period is a grinding period in which the grinder (24) is grinding the welding tip (15a) or a non-grinding period in which the grinder (24) is not grinding the welding tip (15a); and an anomaly detector (40b) that detects anomalies that are associated beforehand with each of the grinding period and the non-grinding period.

## Description

### BACKGROUND

### 1. Field of the Invention

The disclosed embodiments relate to a grinding system and a spot welding system.

### 2. Description of the Related Art

Spot welding machines have been widely used to, for example, assemble automobile parts. Existing spot welding machines have a problem in that it becomes difficult to perform welding precisely during a long-time welding operation because a welding tip, which is one of electrodes for gripping a workpiece therebetween, becomes worn down and because welding debris adheres to the surface of the welding tip. To address this problem, a method has been used in which a welding tip is periodically ground by using a dresser, which is a grinding device, to keep the surface of the welding tip uniform.

A dresser includes a cutter, which is a grinding member attached to a grinder. While being rotated, the cutter grinds an end portion of a welding tip that has worn down or has deteriorated as a result of the welding tip having been used to weld workpieces. In view of production control, it is preferable that such a grinding device be configured to automatically detect an anomaly of a cutting edge of a cutter due to wear or the like and to inform an operator or the like of the anomaly. For example, Japanese Unexamined Patent Application Publication No. 2008-207189 describes a grinding system that automatically detects an anomaly on the basis of the rotational speed of a cutter and a load applied to a driver of the cutter during a grinding operation and informs an operator or the like of the anomaly.

However, the grinding system described above can detect only an anomaly related to a cutting edge of the cutter, because the system monitors only the average of the load applied to the driver of the cutter during a grinding operation. Therefore, the grinding system has a problem in that it can detect only some of various anomalies that actually occur, including, not only an anomaly in a cutting edge of a cutter, an anomaly in attachment of the cutter, an anomaly in driving of a dresser, an anomaly in a pressing force of a welding tip, and the like.

### SUMMARY

An object of an aspect of an embodiment, which has been achieved in view of what is described above, is to provide a grinding system and a spot welding system that can detect various anomalies related to grinding.

According to an aspect of an embodiment, a grinding system includes a period determiner and an anomaly detector. The period determiner determines, on the basis of a torque of a grinder of a dresser that grinds a welding tip, whether a current period is a grinding period in which the grinder is grinding the welding tip or a non-grinding period in which the grinder is not grinding the welding tip. The anomaly detector detects anomalies that are associated beforehand with each of the grinding period and the non-grinding period.

With the aspect of the embodiment, a grinding system and a spot welding system that can detect varies anomalies related to grinding can be provided.

### BRIEF DESCRIPTION OF THE DRAWINGS

Fig. 1 illustrates an anomaly detection process performed by a grinding system according to an embodiment.
Fig. 2 illustrates the overall structure of a spot welding system.
Fig. 3A is a block diagram illustrating the structure of an anomaly detector of the grinding system.
Fig. 3B is a block diagram illustrating the structure of a modification of the anomaly detector of the grinding system.
Fig. 4 is a timing chart illustrating the relationship between the position of a welding tip and various conditions during a grinding operation.
Fig. 5A illustrates the relationship between the rotational torque and the time in a normal grinding period.
Fig. 5B illustrates the relationship between the rotational torque and the time in a grinding period in which an anomaly has occurred.
Fig. 6 illustrates the relationship between the position of the welding tip and the time in a grinding period.
Fig. 7 is a flowchart of the anomaly detection process.

### DESCRIPTION OF THE EMBODIMENTS

Hereinafter, embodiments of a grinding system and a spot welding system according to the present disclosure will be described with reference to the drawings. Note that the present disclosure is not limited to the embodiments described below.

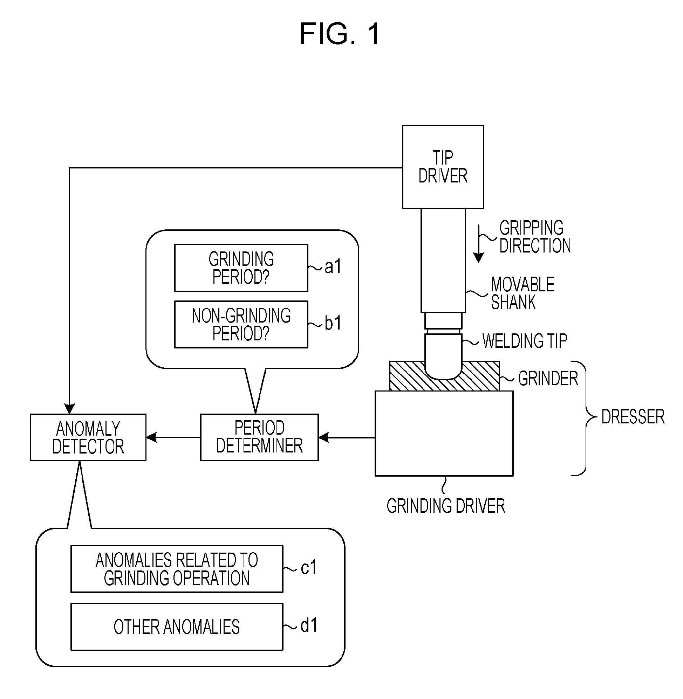

First, referring to Fig. 1, an anomaly detection process performed by a grinding system according to an embodiment will be described. Fig. 1 illustrates the anomaly detection process performed by the grinding system according to the embodiment.

As the number of times a welding tip is used for welding increases, the weld quality decreases because an end of the welding tip becomes worn down or deformed due to heat or because welding debris adheres to the end of the welding tip. Therefore, it is necessary to grind a welding tip periodically, after a predetermined times of welding operations, so as to keep the shape and the surface of the welding tip uniform.

With existing technologies, an anomaly related to grinding of a welding tip is automatically detected and notified on the basis of, for example, the rotational torque or the rotational speed of a cutter, which serves as a grinder, during a grinding operation. However, with existing technologies, only an anomaly related to a cutting edge of the cutter can be detected.

Therefore, it is likely that a failure in welding a workpiece may occur, because a welding process may be restarted when a welding tip has not been ground sufficiently due to an anomaly in a part of the grinding system other than the cutting edge of the cutter. In contrast, the grinding system according to the embodiment is configured to detect various anomalies related to grinding and to stop grinding when such anomalies are detected.

Thus, it is possible to suppress the occurrence of a defect in a product due to an inappropriately ground welding tip. Hereinafter, a process through which the grinding system according to the embodiment detects an anomaly regarding an operation of grinding of a welding tip will be described.

The grinding system according to the embodiment includes a welding tip that is attached to an end of a movable shank that can be moved by a tip driver. The welding tip welds a workpiece that is gripped between the welding tip and another electrode (not shown).

The grinding system according to the embodiment further includes a dresser. The dresser includes a grinder, such as a grindstone, an abrasive cloth, or a metal cutter, which grinds the welding tip by being rotated, swung, or vibrated by a grinding driver.

The grinding system includes a period determiner and an anomaly detector. The period determiner determines whether the current period is a period in which the grinding system is grinding a welding tip or a period in which the grinding system is not grinding a welding tip. The anomaly detector detects anomalies that are associated beforehand with each of the periods determined by the period determiner.

Hereinafter, a process through which the grinding system determines the occurrence of an anomaly will be described. To make the description easier to understand, it is assumed that the grinder, for example, grinds the welding tip by rotating, and that the torque and the speed of the grinder are detected as the rotational torque and the rotational speed.

The period determiner determines whether the current period is a grinding period (a1) or a non-grinding period (b1) on the basis of the rotational torque and the like of the grinder of the dresser, which grinds the welding tip. The term "grinding period" refers to a period in which the grinder is grinding a welding tip, and the term "non-grinding period" refers to a period in which the grinder is not grinding a welding tip.

The anomaly detector detects anomalies (c1) related to a grinding operation in a grinding period and other anomalies (d1) related to, for example, a grinding driver or the like in a non-grinding period. The grinding operation is stopped when the anomaly detector detects an anomaly.

As described above, the grinding system according to the embodiment detects various anomalies associated with the grinding period or in the non-grinding period and automatically stops a grinding operation when an anomaly is detected. Thus, the grinding system can suppress the occurrence of a defect in a product.

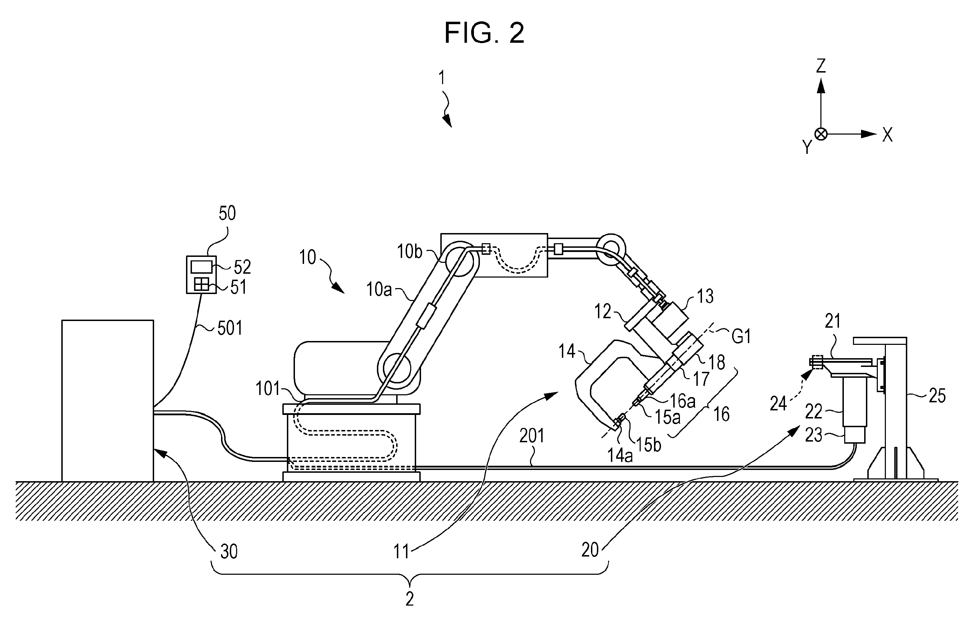

Next, referring to Fig. 2, a grinding system 2 according to the embodiment will be described. Fig. 2 illustrates the overall structure of a spot welding system. To make the description easier to understand, a three-dimensional orthogonal coordinate system is shown in Fig. 2. In the coordinate system, the Z-axis extends in a positive direction that is vertically upward and in a negative direction that is vertically downward. Accordingly, the direction along the XY-plane is the horizontal direction.

As illustrated in Fig. 2, a spot welding system 1, which includes the grinding system 2, includes a robot 10, a dresser 20, and a robot controller 30. The robot controller 30 is equipped with a programming pendant 50.

The robot 10 is a multi-axis articulated robot including a plurality of links 10a, a plurality of joints 10b, and a welding gun 11. The links 10a are attached to the joints 10b so as to be movable relative to each other. The welding gun 11 is an end effector attached to an end of the robot 10.

A part of a power/signal cable 101, which extends from the robot controller 30 to the robot 10, is attached along the links 10a and connected to a welding transformer 13 of the welding gun 11.

Next, the welding gun 11 will be described. The welding gun 11 includes a base member 12 attached to one of the links 10a at an end of the arm of the robot 10. The welding transformer 13, an arm 14, and a tip gun 16 are attached to the base member 12.

The tip gun 16 includes a movable shank 16a, a tip driver 17, and a movement amount detector 18. A welding tip 15a is attached to an end of the movable shank 16a. The tip driver 17 moves the movable shank 16a along an axis G1 and causes the welding tip 15a and a welding tip 15b (described below) to grip a workpiece therebetween.

The arm 14 is a U-shaped flat arm, and a line connecting ends of the U-shaped arm 14 coincides with the axis G1. The tip gun 16 is attached to one end of the U-shaped arm 14 so that the welding tip 15a faces the welding tip 15b. A fixed shank 14a, to which the welding tip 15b is attached, is disposed at the other end the arm 14.

For example, a servo motor is used as the tip driver 17. For example, an encoder is used as the movement amount detector 18. The movement amount detector 18 detects an amount of movement of the welding tip 15a on the basis of the operation of the tip driver 17.

Next, the dresser 20 will be described. A body 21 of the dresser 20 is fixed to a column 25 that is fixed to a floor or the like. The body 21 includes a grinding driver 22, a dresser detector 23, and a grinder 24.

For example, a servo motor is used as the grinding driver 22, and, for example, the grinding driver 22 rotates the grinder 24. The welding tips 15a and 15b are ground by being pressed against the grinder 24 that rotates.

For example, an electric current sensor and an encoder are used as the dresser detector 23, which detects information about the rotational torque and the rotational speed of the grinder 24. A power/signal cable 201, which extends from the robot controller 30 to the dresser 20, is connected to the grinding driver 22 and the dresser detector 23 of the dresser 20.

The programming pendant 50 is an I/O device that serves as a human-machine interface of the robot controller 30. For example, the programming pendant 50 includes an input section 51 and a notifier 52. The input section 51 includes switches, buttons, keys, and the like. The notifier 52 is a display device or the like.

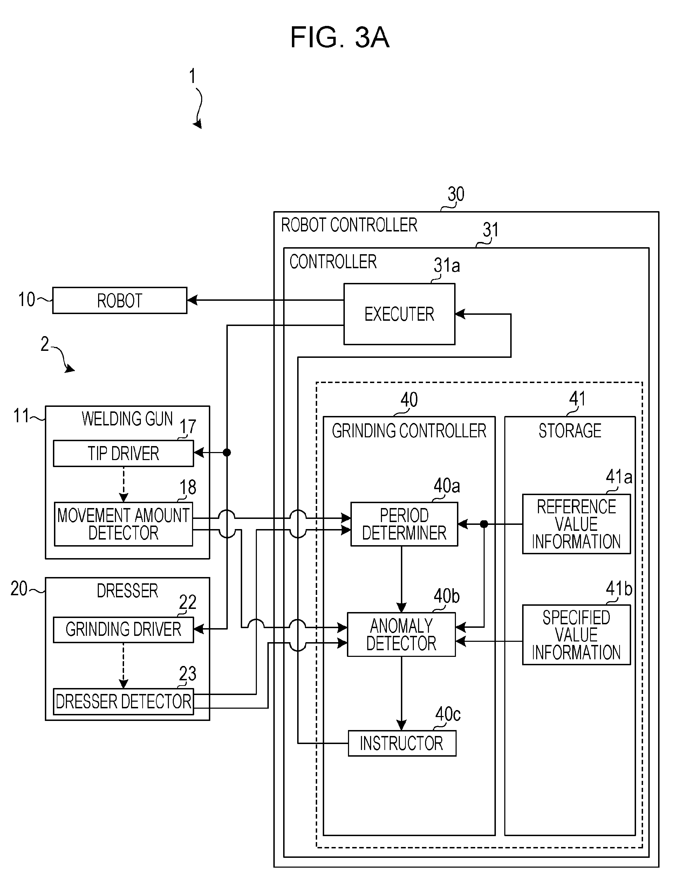

The programming pendant 50 is connected to the robot controller 30 through a power/signal cable 501. The grinding system 2 includes the welding gun 11, the dresser 20, and the robot controller 30. The grinding system 2 is controlled by a grinding controller 40 (described below), which is incorporated in the robot controller 30. However, provided that the same function can be performed, this is not a limitation. This will be described below with reference to Fig. 3A.

Instead of a servo motor, a motor or an actuator that can be operated by using electricity or compressed air can be used as the tip driver 17 and the grinding driver 22. In the case where a servo motor is used as the tip driver 17, an encoder, a Hall element, a resolver, and the like, which are used in combination for position control, may be used as the movement amount detector 18. Alternatively, a processor that calculates a position on the basis of the speed and the torque of a servo motor may be used as the movement amount detector 18.

In the above description, an amount of movement of the welding tip 15a is detected on the basis of an encoder value of the tip driver 17, which is obtained by the movement amount detector 18. Alternatively, an amount of movement of the welding tip 15a may be obtained by using another method.

The position detection function of the movement amount detector 18 may be performed by using, for example, a non-contact position sensor or a contact sensor. Examples of a non-contact sensor include an eddy-current sensor, an optical sensor, an ultrasonic sensor, and an image sensor. For example, the position sensor may be attached to the dresser 20 or the like, and the movement amount detector 18 may obtain an amount of movement of the welding tip 15a as a change in positional data of the welding tip 15a detected by the position sensor.

Next, referring to Fig. 3A, the grinding system 2 according to the embodiment will be described. Fig. 3A is a block diagram illustrating the structure of the anomaly detector of the grinding system. To make the description easier to understand, descriptions of functions of a general grinding system, such as how grinding is performed, will be omitted.

Here, it is assumed that only the welding tip 15a (see Fig. 2) is ground. It is also assumed that the grinder 24 (see Fig. 2) grinds the welding tip 15a by rotating and does not move in the Z-axis direction shown in Fig. 2.

In the following description, a force with which the welding tip 15a is pressed against the grinder 24 will be referred to as "the pressing force", and the rotational torque and the rotational speed of the grinder 24 will be referred to as "the rotational torque" and "the rotational speed".

In the embodiment, the grinding controller 40 and a storage 41 are incorporated in the robot controller 30 of the spot welding system 1. However, they may be independent from the robot controller 30 or may be incorporated in the robot 10 or the dresser 20.

First, the spot welding system 1 includes the robot 10, the welding gun 11, the dresser 20, and the robot controller 30. The robot controller 30 includes a controller 31. The controller 31 includes an executer 31a, the grinding controller 40, and the storage 41.

The robot 10 is, for example, a six-axis robot. The welding gun 11 is attached to a movable end portion of the robot 10. In other words, the robot 10 is a general-purpose robot for which an end effector, such as the welding gun 11, is replaceable. The welding gun 11 and the dresser 20 will be described below.

The controller 31 controls the entire operation of the robot controller 30. The executer 31a causes each of the robot 10, the tip driver 17, and the grinding driver 22 to perform a predetermined operation and causes the spot welding system 1 to perform the entire operation. To be specific, the executer 31a causes the robot 10 to move the welding gun 11, causes the tip driver 17 to move the welding tip 15a, and causes the grinding driver 22 to rotate the grinder 24. In the example shown in Fig. 3A, the executer 31a enables the robot 10, the tip driver 17, and the grinding driver 22 to be controlled with the same control period. The grinding controller 40 and the storage 41 will be described below.

Next, the grinding system 2 will be described. As illustrated in Fig. 3A, the grinding system 2 includes the welding gun 11, the dresser 20, the grinding controller 40, and the storage 41. In Fig. 3A, the grinding controller 40 and the storage 41, which are included in the grinding system 2, are surrounded by a dotted line.

The welding gun 11 includes the tip driver 17 and the movement amount detector 18. The dresser 20 includes the grinding driver 22 and the dresser detector 23. The grinding controller 40 includes a period determiner 40a, an anomaly detector 40b, and an instructor 40c. The storage 41 stores reference value information 41a and specified value information 41b.

First, sections that move the welding tip 15a and sections that detect an amount of movement of the welding tip 15a will be described. The tip driver 17 of the welding gun 11 moves the welding tip 15a along the axis G1 (see Fig. 2) to grind the welding tip 15a by pressing the welding tip 15a against the grinder 24. For example, a servo motor is used as the tip driver 17.

The movement amount detector 18 detects the distance over which the welding tip 15a has moved along the axis G1 on the basis of data obtained from the tip driver 17. For example, an encoder is used as the movement amount detector 18.

Next, sections that drive the dresser 20 will be described. The grinding driver 22 rotates the grinder 24. For example, a servo motor is used as the grinding driver 22. The dresser detector 23 detects the rotational torque and
the rotational speed of the grinder 24 on the basis of data obtained from the grinding driver 22. For example, an electric current sensor and an encoder are used as the dresser detector 23.

Next, the grinding controller 40 will be described. The period determiner 40a obtains information about the rotational torque from the dresser detector 23. Moreover, the period determiner 40a calculates the rate of increase in the rotational torque that occurs when the welding tip 15a is pressed against the grinder 24 and compares the increase rate with the reference value information 41a.

Here, the reference value information 41a includes reference values of or the ranges of reference values of conditional values excluding the grinding amount, such as the increase rate of the rotational torque when a grinding operation is performed normally. If the increase rate of the rotational torque is greater than or equal to the reference value, the period determiner 40a determines that the grinding process has entered a grinding period, in which grinding is performed, from a non-grinding period, in which grinding is not performed. If the increase rate of the rotational torque is less than the reference value, the period determiner 40a determines that an anomaly has occurred and sends a signal to the anomaly detector 40b.

Next, the anomaly detector 40b will be described. The anomaly detector 40b detects anomalies including the following three anomalies. First, a first anomaly detection function will be described. The anomaly detector 40b detects an anomaly of the grinding driver 22 by comparing the rotational torque in a non-grinding period with the reference value information 41a.

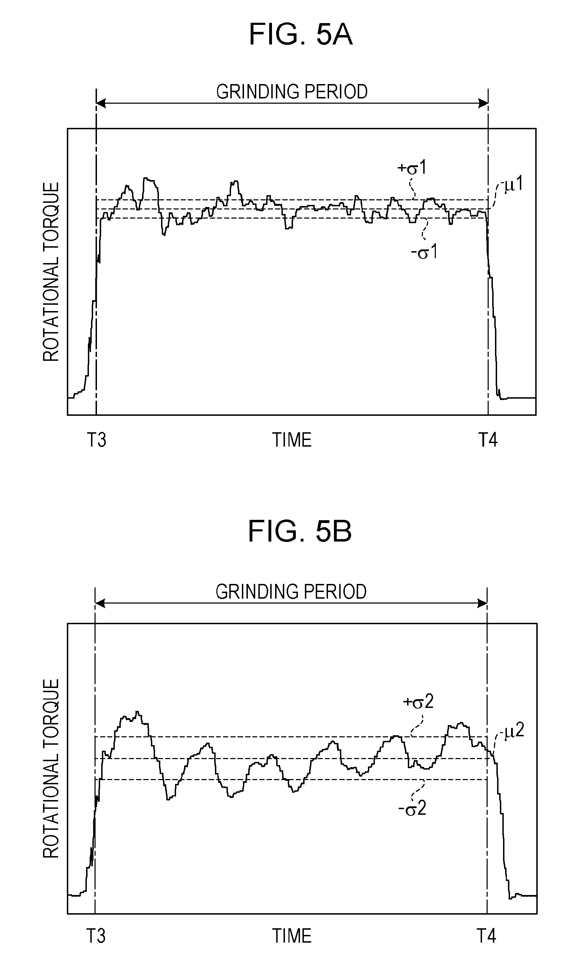

As a second anomaly detection function, the anomaly detector 40b detects an anomaly related to a grinding operation by comparing the rotational torque in a grinding period with the reference value information 41a. This will be described below with reference to Figs. 5A and 5B.

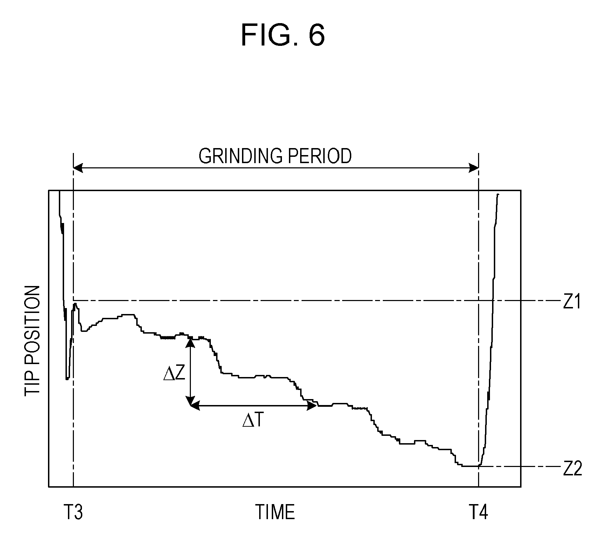

As a third anomaly detection function, the anomaly detector 40b detects an anomaly of the grinding driver 22 or the like by comparing the grinding amount during a grinding operation with the specified value information 41b obtained from the movement amount detector 18. Here, the specified value information 41b includes a value that specifies a grinding amount beforehand. This will be described below with reference to Fig. 6.

When detecting an anomaly or when receiving a signal indicating an anomaly from the period determiner 40a, the anomaly detector 40b sends a signal for stopping a grinding operation to the instructor 40c. When receiving the signal for stopping the grinding operation from the anomaly detector 40b, the instructor 40c instructs the executer 31a to cause the robot 10, the tip driver 17, and the grinding driver 22 to perform operations corresponding to the received signal. The instructor 40c may cause the notifier 52 (see Fig. 2) to notify the occurrence of an anomaly and the cause of the anomaly.

The storage 41 is a storage device, such as a hard disk drive or a non-volatile memory. Descriptions of the reference value information 41a and the specified value information 41b, which have been already made, are omitted here.

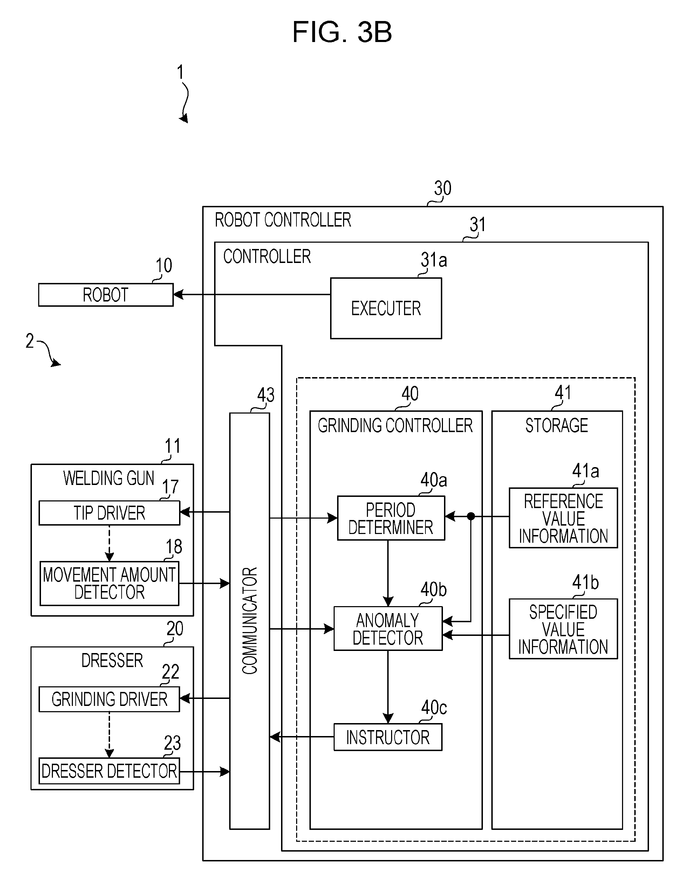

Next, a modification of the example shown in Fig. 3A will be described. Fig. 3B is a block diagram illustrating the structure of the modification of the anomaly detector of the grinding system. In Fig. 3B, elements the same as those shown in Fig. 3A are denoted by the same numerals. Descriptions the same as those for Fig. 3A will be omitted.

As illustrated in Fig. 3B, the grinding system 2 may include a communicator 43. The communicator 43 is a communication device, such as a LAN board. The communicator 43 receives data from the movement amount detector 18 and data from the dresser detector 23 and sends these data to the grinding controller 40. Moreover, the communicator 43 receives data from the grinding controller 40 and sends the data to the tip driver 17 and the grinding driver 22.

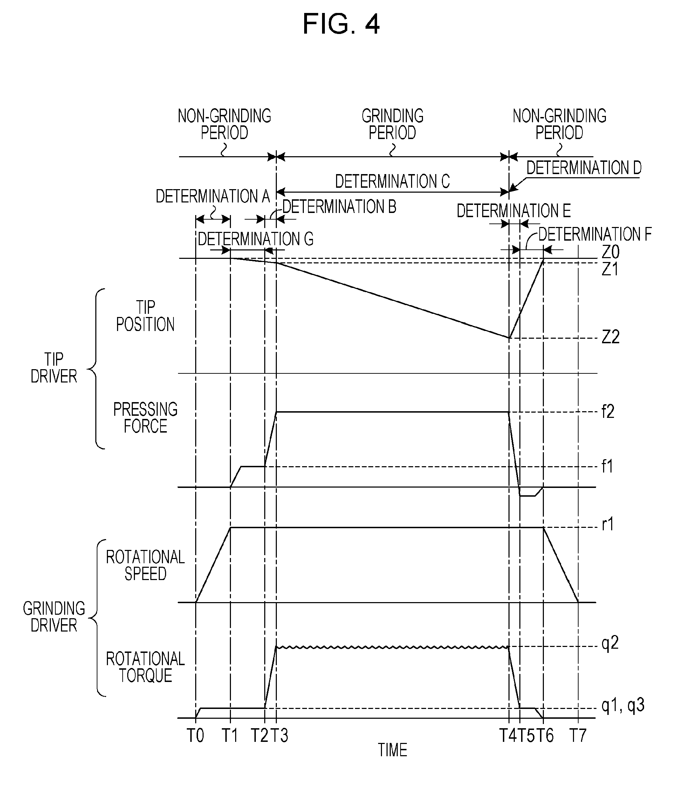

Next, referring to Fig. 4, a specific example of an anomaly detection process performed by the period determiner 40a and the anomaly detector 40b shown in Fig. 3A will be described. Fig. 4 is a timing chart illustrating the relationship between the position of a welding tip and various conditions during a grinding operation, representing a state in which grinding is performed normally. In the example shown in Fig. 4, grinding is performed only for a predetermined period (from time T3 to time T4, as described below).

The term "tip position" refers to the position of the welding tip along the Z-axis, and in particular, to the position of a part of the welding tip 15a (see Fig. 2) that is not related to grinding. It is assumed that a change in the tip position is the same as an amount of movement of the welding tip, that is, the grinding amount. It is defined that a pressing force in the negative Z-axis direction has a positive value.

When the pressing force or the rotational torque starts rising or falling, there is a response time from an initial value to a target value. However, the response time can be neglected because it is very small in comparison with the time scale of a grinding operation.

At time T0, the grinding driver 22 (see Fig. 2) starts rotating the grinder 24 (see Fig. 2). The anomaly detector 40b determines whether or not an anomaly has occurred in the grinding driver 22 by comparing, for example, the average or the amplitude of the rotational torque q1 from time T0 to time T1 with the reference value information 41a (determination A).

For example, if the average or the amplitude of the rotational torque q1 from time T0 to time T1 is greater than the reference value information 41a, this may have occurred, for example, due to an overload caused by a foreign matter caught in a drive train of the grinding driver 22.

Next, if the determination A is normal and when the rotational speed becomes constant at r1, at time T1, the welding tip 15a is pressed with a pressing force f1 and starts moving from the tip position Z0 toward the grinder 24. At time T2, the welding tip 15a contacts the grinder 24.

After contacting the grinder 24, the welding tip 15a is pressed further. At time T3, the pressing force reaches f2. At this time, the tip position is 21. As the pressing force increases, the rotational torque is adjusted so as to keep the rotational speed constant, and the rotational torque reaches q2.

The period determiner 40a compares the increase rate of the rotational torque, that is, (q2 - q1)/(T3 - T2), with the reference value information 41a. If the increase rate of the rotational torque is greater than or equal to the reference value, the period determiner 40a determines that the current period has changed from a non-grinding period to a grinding period (determination B).

If the increase rate of the rotational torque is less than the reference value information 41a in determination B, the period determiner 40a sends a signal indicating the occurrence of an anomaly to the anomaly detector 40b. When receiving the signal indicating the occurrence of the anomaly, the anomaly detector 40b causes the instructor 40c to stop the grinding operation and causes the notifier 52 (see Fig. 2) to notify the anomaly.

Examples of anomalies detected in determination B include a failure of the welding tip 15a to contact the grinder 24, which may be caused by malfunctioning of the robot 10 or a bug in a program of the instructor 40c, and inappropriate setting of the pressing force.

If an anomaly is not detected in determination B, grinding is performed from time T3 to time T4 under a substantially constant condition with the pressing force f2 and the rotational torque q2. The welding tip 15a moves from the tip position Z1 to the tip position Z2 while being ground from an end thereof.

The anomaly detector 40b determines whether or not an anomaly has occurred by comparing the average or the amplitude of the rotational torque from time T3 and time T4 with the reference value information 41a (determination C). This will be described below with reference to Figs. 5A and 5B.

Moreover, the anomaly detector 40b determines whether or not an anomaly has occurred on the basis of a change in the tip position during the grinding operation from time T3 and time T4, that is, the grinding amount (Z1-Z2) (determination D). This will be described below with reference to Fig. 6.

At time T4, if the grinding operation finishes normally, the tip driver 17 rotates in a direction opposite to that in the grinding operation, thereby returning the welding tip 15a to the tip position Z0. At this time, the welding tip 15a is moved away from the grinder 24, and the rotational torque decreases to q3 at time T5. The rotational torque q3 is substantially equal to the rotational torque q1.

The welding tip 15a, which has entered a non-contact state at time T5, returns to the tip position Z0 at time T6. Then, the rotation of the grinder 24 is stopped. The pressing force has a negative value from time T5 to time T6, because it is defined that a pressing force in the negative Z-axis direction has a positive value.

At time T7, the rotation of the grinder 24 is stopped, and the grinding process performed by using the welding tip 15a finishes. The decrease rate of the rotational torque from time T4 to time T5 is (q3 - q2)/(T5 - T4).

Determination E may be performed to determine whether or not the current period has changed from a grinding period to a non-grinding period by comparing the decrease rate of the rotational torque with the reference value information 41a. Examples of anomalies detected by determination E include malfunctioning of the tip gun 16 and a bug in a program of the instructor 40c.

The rotational torque q3 is the rotational torque of the grinder 24 when it is not in contact with the welding tip 15a. In the period from time T5 to time T6, determination F, which is anomaly detection similar to determination A, may be performed.

Determination G may be performed to detect an anomaly of the tip driver 17 on the basis of the average, the amplitude, or the like of the pressing force in a non-grinding period, such as a period from time T1 to time T2 or a period from time T5 to time T6. For example, in the case where a servo motor is used as the tip driver 17, examples of anomalies of the tip driver 17 include a short circuit of a motor coil, disconnection of a motor coil, breakage of a drive train, a failure in the movement amount detector 18, and malfunctioning of a servo amplifier.

Next, referring to Figs. 5A and 5B, determination C (see Fig. 4), which is performed in a grinding period to determine whether an anomaly has occurred, will be described. Fig. 5A illustrates the relationship between the rotational torque and the time in a normal grinding period. For example, the anomaly detector 40b evaluates the mean value of the rotational torque by using the average µ and evaluates the amplitude of the rotational torque by using the standard deviation σ. In this case, the average µ1 and the standard deviation σ1 of the rotational torque in a normal grinding period are stored in the reference value information 41a.

The rotational torque q2 shown in Fig. 4 is equal to the average µ1. It is preferable that the data shown in Fig. 5A be obtained before starting actual production. It is more preferable that data of changes in the rotational torque corresponding to various anomalies be obtained beforehand.

Next, description will be provided with reference to Fig. 5B. Fig. 5B illustrates the relationship between the rotational torque and the time in a grinding period in which an anomaly has occurred. Fig. 5B shows the rotational torque in a grinding period in a case where a "grinding member" (not shown) is attached to the grinder 24 (see Fig. 2) in the opposite direction with respect to the rotation direction of the grinder 24 and therefore grinding is not appropriately performed.

The only difference between Figs. 5A and 5B is the direction in which the grinding member is attached, and other conditions are substantially the same. In the grinding period shown in Fig. 5B, the average of the rotational torque is µ2 and the standard deviation of the rotational torque is σ2.

The average µ2 is less than the average µ1, because, when the grinding member is attached to the grinder 24 in the opposite direction, the grinding member slips over the surface of the welding tip 15a (see Fig. 2) and grinding is not appropriately performed.

The standard deviation σ2 is greater than the standard deviation σ1, because the rotational torque periodically varies widely. Thus, when an anomaly occurs, the average µ and the standard deviation σ of the rotational torque in the grinding period are changed.

The anomaly detector 40b calculates the average µ and the standard deviation σ of the rotational torque detected during a grinding operation and compares these values with the reference value information 41a. If the average µ and the standard deviation σ are not in the ranges of the reference value information 41a, it is determined that an anomaly has occurred.

If the average µ is less than the lower limit of the reference value information 41a, for example, any of the following anomalies may have occurred: wear of a grinding member, an attachment-related failure such as loosening of an attachment portion or an error in the attachment direction, clogging of ground chips, and inappropriate setting of the value of the pressing force.

If the average µ is greater than the upper limit of the reference value information 41a, an anomaly such as malfunctioning of the grinding driver 22 or inappropriate setting of the value of the pressing force may have occurred. If the standard deviation σ is greater than the upper limit of the reference value information 41a, an anomaly such as a failure in attachment of the grinding member or malfunctioning of the grinding driver 22 may have occurred.

As the average, any of the arithmetic mean, the median, and the mode may be used. The sampling time for calculating the average may be shorter than the period from time T4 to time T3. In this case, a moving average can be used.

If the moving average is used to calculate the average, an anomaly can be detected by using variation in the moving average during a grinding period. The amplitude of the rotational torque may be evaluated by using the coefficient of variation σ/µ.

The rotational torque with respect to time may be Fourier-transformed by using an algorithm such as a fast Fourier transform, and determination of whether an anomaly has occurred may be performed by comparing an obtained spectrum with a spectrum from the reference value information 41a.

Reference values of the reference value information 41a may be set at multiple levels so that the degree of anomaly can be detected. In this case, the reference values are set, for example, as the ratios to the reference value information 41a. In the determination A, F, or G shown in Fig. 4, an anomaly can be detected in the same way as in determination C.

Next, referring to Fig. 6, determination D (see Fig. 4) for determining whether or not an anomaly has occurred on the basis of the grinding amount will be described. Fig. 6 illustrates the relationship between the position of the welding tip and the time in a grinding period. The anomaly detector 40b determines the occurrence of an anomaly by comparing a change (Z1 - Z2) in the tip position during a grinding operation, which corresponds to the grinding amount, with the specified value information 41b.

If the grinding amount (Z1 - Z2) is greater than the specified value information 41b, an anomaly such as malfunctioning of the grinding driver 22 or an excessively large pressing force may have occurred. If the amount of movement (Z1 - Z2) is less than the specified value information 41b, an anomaly such as an excessively small pressing force or wear of the grinding member may have occurred.

The grinding speed ΔZ/ΔT may be calculated from the amount of movement ΔZ over which the welding tip 15a moves in a certain time ΔT, and anomaly determination may be performed in the same manner by comparing the calculated grinding speed with the reference value information 41a.

As described above, the grinding system 2 according to the embodiment can detect various anomalies related to grinding by comparing the rotational torque in a grinding operation, the grinding amount during a grinding operation, and the like with the reference value information 41a and the specified value information 41b.

The anomalies that can be detected in determinations performed by the anomaly detector 40b considerably overlap. Therefore, one anomaly is detected a plurality of times from different viewpoints, so that it is unlikely that the anomaly is overlooked.

It has been described above that grinding is performed in a grinding period while keeping the pressing force and the rotational torque substantially constant. However, pressing of the welding tip 15a against the grinder 24 in the grinding period may be performed in multiple steps including, for example, first to third pressing steps described below.

The first pressing step is performed with a relatively small pressing force so as to suppress excessive biting of the grinding member into the welding tip 15a and to suppress damage to the grinding member.

The second pressing step is mainly performed with a larger pressing force to cut the sides of the welding tip 15a and to roughly process an end portion of the welding tip 15a. The third pressing step is performed to dress the surface of the welding tip 15a by removing burrs and stepped portions from the surface of the welding tip 15a.

In the case where such multiple pressing steps are performed in a grinding period, the period determiner 40a can determine whether or not an anomaly related to a change of the pressing steps has occurred on the basis of the increase rate or the decrease rate of the rotational torque at the start or the end of each of the pressing steps in the grinding period.

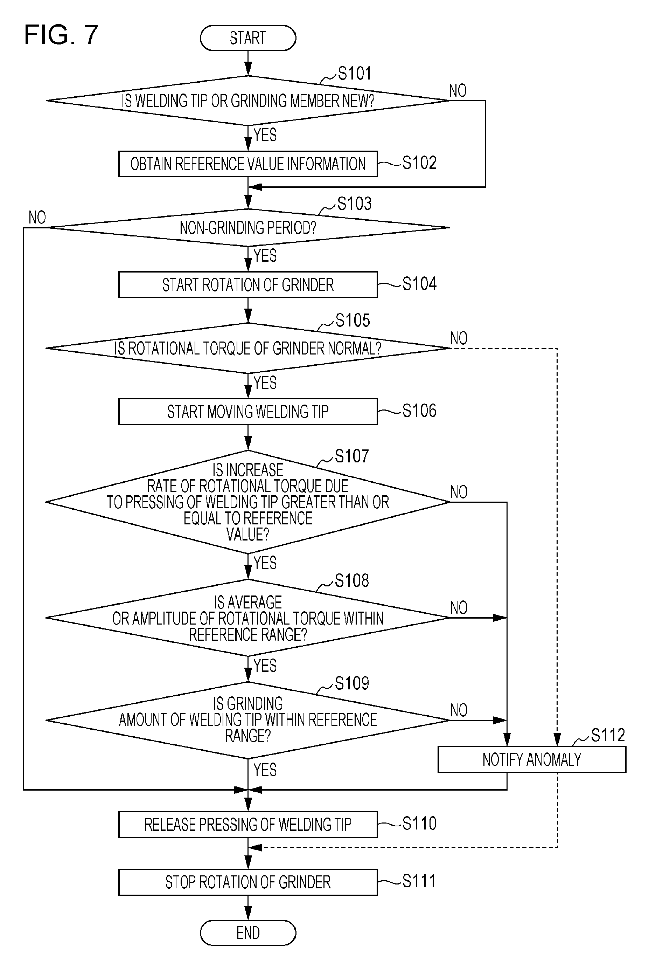

Next, referring to Fig. 7, a grinding process performed by the grinding system 2 according to the embodiment will be described. Fig. 7 is a flowchart of an anomaly detection process. To make the description easier, it is assumed that only the welding tip 15a is ground.

As illustrated in Fig. 7, in step S101, whether or not the welding tip 15a or the grinding member is new is determined. If the welding tip 15a or the grinding member is new ("Yes" in step S101), the reference value information 41a is obtained before starting a grinding operation (step S102). If the welding tip 15a or the grinding member is not new ("No" in step S101), step S102 is omitted. The period determiner 40a determines whether or not the current period is a non-grinding period depending on, for example, whether the rotational torque, the rotational speed, and the pressing force are substantially zero and the grinding system 2 is in a standby mode (step S103).

If it is determined in step S103 that the grinding system 2 is not in a standby mode ("No" in step S103), step S110 (described below) and subsequent steps are performed. If it is determined in step S103 that the current period is a non-grinding period ("Yes" in step S103), the instructor 40c instructs the grinder 24 to rotate (step S104).

The anomaly detector 40b determines whether an anomaly has occurred by comparing the rotational torque of the grinder 24, which is rotating while not being in contact with the welding tip 15a, with the reference value information 41a (step S105). If it is determined in step S105 that an anomaly has occurred ("No" in step S105), the instructor 40c causes the notifier 52 to notify the anomaly (step S112).

Examples of anomalies detected in step S105 include malfunctioning of the grinding driver 22. Next, the instructor 40c stops the rotation of the grinder 24 (step S111) to finish the grinding operation.

If it is determined in step S105 that an anomaly has not occurred ("Yes" in step S105), the instructor 40c causes the welding gun 11 to be moved to a predetermined position, and the tip gun 16 moves the welding tip 15a toward the grinder 24 along the axis G1 (step S106).

When the welding tip 15a contacts the grinder 24, the tip driver 17 presses the welding tip 15a further. The period determiner 40a detects a change from a non-grinding period to a grinding period (step S107) by comparing the increase rate of the rotational torque during a period in which pressing is performed with the reference value information 41a, and determines that the current period is a grinding period.

If it is determined in step S107 that an anomaly has occurred ("No" in step S107), the anomaly may be malfunctioning of the robot 10, a bug in a program of the instructor 40c, inappropriate setting of the pressing force, or the like.

If it is determined in step S107 that an anomaly has not occurred ("Yes" in step S107), grinding of the welding tip 15a is performed. The anomaly detector 40b determines whether or not an anomaly has occurred on the basis of the average, the amplitude, and the like of the rotational torque in the grinding period (step S108).

If it is determined in step S108 that an anomaly has occurred ("No" in step S108), the anomaly may be wear of the grinding member, an error in attachment of the grinding member, clogging of ground chips, inappropriate setting of the pressing force, malfunctioning of the grinding driver 22, or the like.

If an anomaly is not detected on the basis of the rotational torque in the grinding period ("Yes" in step S108), the anomaly detector 40b determines whether or not an anomaly has occurred on the basis of the grinding amount of the welding tip 15a (step S109).

If it is determined in step S109 that an anomaly has occurred ("No" in step S109), the anomaly may be wear of the grinding member, inappropriate setting of the pressing force, malfunctioning of the grinding driver 22, or the like.

If the grinding amount of the welding tip 15a during the grinding operation is within the range of the reference value information 41a and therefore it is determined that an anomaly has not occurred ("Yes" in step S109), the instructor 40c instructs that the welding tip 15a be released from the grinder 24 (step S110).

Next, the instructor 40c stops the rotation of the grinder 24 (step S111) to finish the grinding operation. If it is determined, in any one of steps S107, S108, and S109, that an anomaly has occurred, the instructor 40c causes the notifier 52 to notify the anomaly (step S112).

Also in this case, the instructor 40c instructs that the welding tip 15a be released from the grinder 24 (step S110), and stops the rotation of the grinder 24 (step S111) to finish the grinding operation.

As heretofore described, a grinding system according to an aspect of the embodiment includes a period determiner and an anomaly detector. The period determiner determines, on the basis of a torque of a grinder of a dresser that grinds a welding tip, whether the current period is a grinding period in which the grinder is grinding the welding tip or a non-grinding period in which the grinder is not grinding the welding tip. The anomaly detector detects anomalies that are associated beforehand with each of the grinding period and the non-grinding period.

Further effects and modifications can be easily derived by a person having ordinary skill in the art. Therefore, broader aspects of the present disclosure are not limited to specific, detailed, and exemplary embodiments described above. Accordingly, various modifications, combinations, sub-combinations and alterations can be made within the spirit and scope defined by the appended claims and the equivalents thereof.

## Claims

1. A grinding system (2) comprising:
a period determiner (40a) that determines, on the basis of a torque of a grinder (24) of a dresser (20) that grinds a welding tip (15a), whether a current period is a grinding period in which the grinder (24) is grinding the welding tip (15a) or a non-grinding period in which the grinder (24) is not grinding the welding tip (15a); and
an anomaly detector (40b) that detects anomalies that are associated beforehand with each of the grinding period and the non-grinding period.

2. The grinding system (2) according to Claim 1, wherein, in the grinding period determined by the period determiner (40a), the anomaly detector (40b) performs an operation of detecting an anomaly on the basis of an amplitude of the torque.

3. The grinding system (2) according to Claim 1 or 2, wherein, in the non-grinding period determined by the period determiner (40a), the anomaly detector (40b) performs an operation of detecting an anomaly on the basis of comparison of the torque and a predetermined threshold.

4. The grinding system (2) according to any one of Claims 1 to 3,
wherein the period determiner (40a) determines whether the current period is the grinding period or the non-grinding period on the basis of an increase rate or a decrease rate of the torque.

5. The grinding system (2) according to any one of Claims 1 to 4,
wherein the anomaly detector (40b) detects an anomaly on the basis of comparison of an increase rate or a decrease rate of the torque and a predetermined threshold.

6. The grinding system (2) according to any one of Claims 1 to 5, further comprising:
a pair of grippers that grip a workpiece therebetween by approaching each other, at least one of the grippers including the welding tip (15a);
a welding gun (11) on which the pair of grippers are disposed, the welding gun (11) being movable relative to the workpiece; and
a movement amount detector that detects an amount of movement of the welding tip (15a) relative to the other gripper,
wherein the anomaly detector (40b) performs an operation of detecting an anomaly on the basis of comparison of the amount of movement of the welding tip (15a) and a predetermined threshold.

7. The grinding system (2) according to Claim 6, wherein the welding gun (11) is attached to an end of an arm of a robot (10).

8. A spot welding system (1) comprising:
the grinding system (2) according to any one of Claims 1 to 7.
